# EUROPÄISCHE PATENTANMELDUNG

(11) **EP 4 678 372 A1**
(43) Veröffentlichungstag der Anmeldung: **14.01.2026**
(21) Anmeldenummer: 25186326.2
(22) Anmeldetag: 30.06.2025
(51) Int. Cl.: B29C 45/73, B29C 35/00

(54) **TEMPERIERSYSTEM ZUM TEMPERIEREN VON KOMPONENTEN VON PRODUKTIONSZELLEN**

(30) Priorität: 09.07.2024 AT 505602024
(71) Anmelder: ENGEL AUSTRIA GmbH, 4311 Schwertberg (AT)
(72) Erfinder: SCHLÄGER, Mathias, 4232 Hagenberg im Mühlkreis (AT); MAYR, Karlheinz, 4311 Schwertberg (AT)
(74) Vertreter: Torggler & Hofmann Patentanwälte - Innsbruck

(57) **Zusammenfassung**

Temperiersystem zum Temperieren von Komponenten (14), insbesondere Formwerkzeugen (3), von Produktionszellen (2), mit jeweils wenigstens einer zentral versorgbaren und wenigstens einer Produktionszelle (2) zugeordneten Temperiereinrichtung (4) und einer zentralen Steuer- oder Regeleinheit (6) sowie optional wenigstens einer Fördervorrichtung (5) zum Versorgen der Temperiereinrichtungen (4) mit einem Temperiermedium, wobei die zentrale Steuer- oder Regeleinheit (6) zum Ansteuern der jeweils wenigstens einen Temperiereinrichtung (4) und optional der wenigstens einen Fördervorrichtung (5) mittels Ansteuerbefehlen ausgebildet ist, wobei die zentrale Steuer- oder Regeleinheit (6) dazu ausgebildet ist, beim Verändern und/oder bei einer Veränderung eines Betriebszustands wenigstens einer Produktionszelle (2) eine dadurch verursachte Folgeveränderung von Betriebszuständen der den anderen Produktionszellen (2) zugeordneten Temperiereinrichtungen (4) durch Verändern der Ansteuerbefehle zumindest teilweise zu kompensieren.

## Beschreibung

Die vorliegende Erfindung betrifft ein Temperiersystem zum Temperieren von Komponenten, insbesondere Formwerkzeugen, von Produktionszellen sowie ein Verfahren zum Betreiben eines solchen Temperiersystems.

Formwerkzeuge, welche in Formgebungsmaschinen wie zum Beispiel Spritzgießmaschinen, Spritzpressen, Pressen und dergleichen zum Einsatz kommen, müssen in vielen Fällen temperiert, das heißt gezielt gekühlt oder erwärmt werden.

Im Folgenden soll der Stand der Technik anhand eines Formwerkzeuges einer Spritzgießmaschine kurz umrissen werden. Allgemeines gilt für Komponenten von Produktionszellen.

Die Temperierung eines Formwerkzeuges kann durch das Fördern von Temperiermedien durch entsprechende Temperierkanäle, welche das Formwerkzeug durchsetzen, erreicht werden. Dabei werden in vielen Fällen mehrere Temperierkanäle eingesetzt und es ist bekannt, den Temperiermedienvolumenstrom durch die einzelnen Temperierkanäle durch Einstellen des Volumenstroms, des Druckgefälles oder der Temperaturdifferenz zu regeln. Hierfür sind die einzelnen Temperierkanäle zumeist mittels Drosselventilen oder anderen Stellorganen zur Regelung ausgestattet.

Entsprechende Regelungssystem gehen beispielsweise aus der DE 10 2016 011 873 A1 oder der EP 3 309 402 A1 hervor.

Entsprechende Spritzgießmaschinen oder allgemein Formgebungsmaschinen sind beispielsweise oft in Produktionszellen integriert, wobei noch weitere mit der Spritzgießmaschine kooperierende Vorrichtungen vorgesehen sind, welche gegebenenfalls ebenfalls einer Temperierung bedürfen, wie beispielsweise eine Vorerwärmung von Einlegekomponenten oder auch eine Bauteilnachbehandlung der produzierten Bauteile.

Da solche Produktionszellen meist nicht für sich alleinstehen, sondern mehrere Produktionszellen in einer Halle eines Produktionsstandorts angeordnet sind, ist es aus dem Stand der Technik bekannt, Temperiersysteme umzusetzen, welche dazu ausgebildet sind, mehrere Produktionszellen zu versorgen, wobei durch das Temperiersystem mehrere Produktionszellen mit einem Temperiermedium versorgt werden, welches zwischen dem Produktionszellen aufgeteilt wird.

Gattungsgemäße Temperiersysteme zum Temperieren von Komponenten von Produktionszellen umfassen jeweils wenigstens eine zentral versorgbare und wenigstens einer Produktionszelle zugeordnete Temperiereinrichtung und optional wenigstens eine Fördervorrichtung zum Versorgen der Temperiereinrichtungen mit einem Temperiermedium.

So wird im laufenden Betrieb jede der Produktionszellen, bzw. die Temperiereinrichtungen der Produktionszellen über die wenigstens eine Fördervorrichtung, zentral mit einem Temperiermedium versorgt.

Nachteilig daran hat sich jedoch herausgestellt, dass ein entsprechendes System eine geringe Flexibilität hinsichtlich einer Veränderung von Betriebsbedingungen der einzelnen Produktionszellen aufweist.

So wirkt sich die Veränderung eines Betriebszustandes einer Produktionszelle direkt auf alle anderen Produktionszellen aus (in der vorliegenden Terminologie: Folgeveränderungen). Wird beispielsweise eine Produktionszelle abgeschaltet, sind die übrigen Produktionszellen einem höheren Teilvolumenstrom ausgesetzt, wenn die Fördervorrichtung einen konstanten Förderstrom bereitstellt. Umgekehrt kann es natürlich auch zu einem geringeren Teilvolumenstrom an den Produktionszellen kommen, wenn eine Produktionszelle zugeschaltet wird. Durch solche Veränderungen in der Temperierung kann es zu Ausschussteilen kommen, da eine zu hohe Erwärmung oder Kühlung der Produktionszellen während des laufenden Betriebes vorgenommen wird.

Aufgabe der vorliegenden Erfindung ist es, ein Temperiersystem zum Temperieren von Komponenten von Produktionszellen sowie ein Verfahren zum Betreiben eines solchen Temperiersystems bereitzustellen, mit welchem die zuvor beschriebenen Nachteile des Standes der Technik zumindest teilweise verbessert werden können und/oder eine individuellere Temperierung von Produktionszellen trotz zentraler Versorgung umgesetzt werden kann und/oder mit welcher eine dynamischere Betriebsanpassung während des laufenden Betriebes von mehreren Produktionszellen trotz zentraler Versorgung von mehreren Produktionszellen vorgenommen werden kann und/oder womit das Auftreten von Ausschussteilen reduziert werden kann.

Diese Aufgabe wird erfindungsgemäß durch ein Temperiersystem zum Temperieren von Komponenten, insbesondere Formwerkzeugen von Produktionszellen mit den Merkmalen des Anspruchs 1, einem Verfahren zum Betreiben eines Temperiersystems zum Temperieren von Komponenten von Produktionszellen mit den Merkmalen des Anspruchs 14, einer Verwendung eines solchen Temperiersystems bei einem solchen Verfahren, einem Computerprogrammprodukt mit den Merkmalen des Anspruches 16, einem computerlesbaren transitorischen oder nicht-transitorischen Datenträger, sowie einem Datenträgersignal nach Anspruch 18 gelöst.

Erfindungsgemäß umfasst ein Temperiersystem zum Temperieren von Komponenten, insbesondere Formwerkzeugen von Produktionszellen, jeweils wenigstens eine zentral versorgbare und wenigstens einer Produktionszelle zugeordnete Temperiereinrichtung und eine zentrale Steuer- oder Regeleinheit sowie optional wenigstens einer Fördervorrichtung zum Versorgen der Temperiereinrichtungen mit einem Temperiermedium, wobei die zentrale Steuer- oder Regeleinheit zum Ansteuern der jeweils wenigstens einen Temperiereinrichtung und optional der wenigstens einen Fördervorrichtung mittels Ansteuerbefehlen ausgebildet ist, wobei die Steuer- oder Regeleinheit dazu ausgebildet ist, beim Verändern und/oder bei einer Veränderung eines Betriebszustandes wenigstens einer Produktionszelle eine dadurch verursachte Folgeveränderung von Betriebszuständen der an den anderen Produktionszellen zugeordneten Temperiereinrichtungen durch Veränderung der Ansteuerbefehle zumindest teilweise zu kompensieren.

Durch die zentrale Steuer- oder Regeleinheit wird somit die Möglichkeit geschaffen, übergreifend auf alle Produktionszellen, welche zur Temperierung über die jeweiligen Temperiereinrichtungen am Temperiersystem angeschlossen sind, Einflüsse, welche sich auf die jeweiligen Produktionszellen und deren Temperierung auswirken, zu berücksichtigen und automatisiert oder teilautomatisiert zu kompensieren.

Somit kann beispielsweise durch die zentrale Steuer- oder Regeleinheit erkannt werden, wenn sich eine Änderung im Betriebszustand einer Produktionsstelle einstellt oder anbahnt, welcher sich direkt auf die anderen Produktionszellen auswirkt. Ein höherer oder geringerer Gesamtförderstrom oder Druck im Zulauf können beispielweise dazu verwendet werden, um diese Effekte zu kompensieren.

Allgemein formuliert, kann durch das Erfassen der Veränderung des Betriebszustands mittels der zentralen Steuer- oder Regeleinheit umgehend die Möglichkeit geschaffen werden, durch Veränderung der Ansteuerbefehle der Temperiereinrichtungen der anderen Produktionszellen und/oder der wenigstens einen Fördervorrichtung, einer Folgeveränderung entgegenwirken oder diese kompensieren.

Ähnlich kann bei einem geplanten Verändern des Betriebszustandes einer Produktionszelle vorgegangen werden. Dafür muss nicht notwendigerweise auf das Erfassen der Veränderung des Betriebszustands gewartet werden, sondern das Kompensieren kann bevorzugt im Rahmen einer prädiktiven Ansteuerung und/oder Vorsteuerung geschehen.

Eine Veränderung eines Betriebszustandes ist nicht zwangsläufig als Ausschaltung oder Inbetriebnahme wenigstens einer Produktionszelle zu verstehen. Als Veränderung des Betriebszustandes kommt jegliche Variation oder Veränderung wenigstens einer Produktionszelle in Frage, welche sich insbesondere beim Temperieren der anderen Produktionszellen als Folgeveränderung äußert.

Beispielsweise kann sich eine Veränderung eines Energiebedarfs einer Produktionszelle (vorzugsweise eine Verringerung eines Kühlmittelbedarfs einer Produktionszelle durch eine Erhöhung der Zykluszeit oder sinkende Umgebungstemperaturen) auch direkt auf die anderen Produktionszellen auswirken, da sich bei gleichbleibender Temperierung des Temperiersystems der von der wenigstens einen Produktionszelle nicht benötigte Energiebedarf auf die anderen Produktionszellen umverteilt. Auch Veränderungen wenigstens einer Produktionszelle hinsichtlich der Umgebungstemperatur, der Produktivität, der Fertigungsgeschwindigkeit, des verarbeiteten Materials oder der Alterung der Produktionszelle können sich als Folgeveränderungen an den anderen Produktionszellen zeigen.

Eine Veränderung eines Betriebszustandes kann aktiv durch manuelle oder teilautomatisierte Veränderung an der Produktionszelle (beispielweise einem Parameterwechsel an einer Spritzgießmaschine) oder passiv durch automatisches oder fehlerbedingtes Verändern der Betriebsbedingung (beispielweise durch automatisches Abschalten in Folge eine Störung der Produktionszelle) erfolgen.

Entsprechende Komponenten von Produktionszellen können beispielsweise Formwerkzeuge sein. Formwerkzeuge werden von Formgebungsmaschinen wie beispielsweise Spritzgießmaschinen, Spritzpressen, Pressen und dergleichen eingesetzt.

Ansteuerbefehle zum Ansteuern von wenigstens einer Temperiereinrichtung und/oder der wenigstens einen Fördervorrichtung können dazu ausgebildet sein, diese Komponenten anzusteuern, zu regeln oder Einstellungen dieser Komponenten zu verändern. Beispielsweise kann es sich bei den Ansteuerbefehlen um Referenzwerte für Steuerungen oder Regelungen und/oder um Reglerverstärkungen und/oder um Parameter Modell-basierter Steuerungen oder Regelungen handeln.

Produktionszellen können bevorzugt aus einer Formgebungsmaschine, einem daran montierten Formwerkzeug sowie weiteren Geräten und Komponenten bestehen, die für die vorgesehene Produktion der Formteile notwendig oder von Vorteil sind. Natürlich ist jedenfalls die wenigstens eine Temperiereinrichtung Teil der Produktionszelle, welcher sie zugeordnet ist.

Die wenigstens eine Fördervorrichtung kann für die zentrale Versorgung der Temperiereinrichtungen vorgesehen und/oder konfiguriert sein.

Eine zentrale Versorgung des Temperiersystems kann beispielsweise durch eine zentrale Kühlanlage, ein zentrales Temperiergerät, ein zentrales Kühlgerät, eine zentrale Heizvorrichtung, einen zentralen Wärmetauscher oder die zentrale Beimengung von kaltem oder warmen Temperiermedium erfolgen.

Die zentrale Steuer- oder Regeleinheit ist in dem Sinn zentral, dass sie dazu eingerichtet ist, die Ansteuerbefehle an die Temperiereinrichtungen und optional der wenigstens einen Fördervorrichtung auszugeben. Physisch kann die Steuer- oder Regeleinheit als separater Computer am Produktionsstandort oder als Cloudserver ausgebildet sein. Eine andere Alternative wäre, dass die Steuer- oder Regeleinheit in eine Maschinensteuerung einer Formgebungsmaschine oder einer Temperiereinrichtung integriert ist. Die Steuer- oder Regeleinheit kann auch durch Kombinationen der erwähnten Möglichkeiten und/oder verteiltes rechnen realisiert werden.

Analoges gilt für Steuer- oder Regelvorrichtungen der einzelnen Temperiereinrichtungen.

Die Temperiereinrichtungen können in die Formgebungsmaschine und/oder das Formwerkzeug integriert sein. Alternativ oder zusätzlich können separate Temperiergeräte zum Einsatz kommen.

Terminologisch unterschieden wird im Rahmen des vorliegenden Dokuments zwischen einem aktiven Verändern eines Betriebszustands einer Produktionszelle, wozu beispielsweise das Abschalten und/oder Einschalten einer Produktionszelle und/oder das Verringern und/oder Erhöhen der Produktionsaktivität einer Produktionszelle (beispielsweise in vorgegebener zeitlicher Abfolge) zählt.

Passive Veränderungen eines Betriebszustands treten beispielsweise durch sich verändernde Umgebungseinflüsse, wie zum Beispiel tageszeitlich oder witterungsbedingte Änderungen der Umgebungstemperatur und/oder der Vorlauftemperatur, auf.

Weitere Beispiele wären eine Druckveränderung an einer Temperiermedienquelle oder ein Maschinenschaden.

Der veränderte Betriebszustand kann dann beispielsweise in zu hohen oder niedrigen Temperaturen des Formwerkzeugs oder zu geringen oder zu hohen Volumenströmen in Temperierkanälen bestehen, die beispielsweise aus Sicht der Energieeffizienz und/oder der Temperaturverteilung unerwünscht sind.

Das Kompensieren der Folgeveränderungen der Betriebszustände geschieht bevorzugt vollständig. In der Praxis sind aber auch Szenarien denkbar, wobei die Kompensation nicht perfekt durchführbar ist, beispielsweise weil nicht genug Förderleistung vorhanden ist oder weil beim Einregeln ein gewisser Zeitraum benötigt wird, bis sich wieder ein (quasi-) stationärer Zustand einstellt.

Ein nur teilweises Kompensieren kann auch gewünscht sein, um ein möglichst robustes System gegenüber Ausfällen zu erzielen, wobei zum Erreichen dieses Ziels auch eine gewisse Ausschussrate akzeptiert wird. Beispielsweise könnte für eine Temperiereinrichtung eine gewisse Menge von Betriebszuständen als akzeptabel deklariert werden und dann nur die Kompensation so durchgeführt werden, dass der Bereich der akzeptablen Betriebszustände nicht verlassen wird.

Die in Verbindung mit dem Stand der Technik angeführten Maßnahmen und Merkmale können auch im Rahmen der Erfindung vorgesehen werden.

Der das Computerprogramm ausführende Computer kann die zentrale Steuer- oder Regeleinheit des Temperiersystems sein.

Das Computerprogrammprodukt kann das Kompensieren der Folgeveränderungen auslösen und/oder beginnen und/oder fortsetzen, wenn vom Computerprogrammprodukt aktiv ein Verändern des Betriebszustandes betrieben wird und/oder wenn der ausführende Computer Signale, beispielsweise von Steuer- und/oder Regelvorrichtungen der Produktionszellen, als Input entgegennimmt, die auf eine Veränderung des Betriebszustands schließen lassen.

Als Verändern des Betriebszustands kann als aktives Setzen einer Handlung verstanden werden, deren Folge ein geänderter Betriebszustand ist. Als Veränderung des Betriebszustands kann das Erhalten von Signalen verstanden werden, die auf einen geänderten Betriebszustand schließen lassen.

Die Aussagen, die hierin in Bezug auf die zentrale Steuer- und/oder Regelvorrichtung enthalten sind, gelten sinngemäß auch für das Computerprogrammprodukt.

Vorteilhafte Ausführungsformen der Erfindung sind in den abhängigen Ansprüchen definiert.

Es kann vorgesehen sein, dass eine den Produktionszellen zugeordnete wenigstens eine Temperiereinrichtung eine Steuer- oder Regelvorrichtung aufweist, welche Steuer- oder Regelvorrichtung signalleitend mit der zentralen Steuer- oder Regeleinheit verbunden ist, wobei die Steuer- oder Regelvorrichtung so ausgebildet ist, die Temperierung der jeweiligen Produktionszellen, vorzugsweise lokal, zu steuern oder zu regeln.

So kann es beispielweise vorgesehen sein, dass die der wenigsten einen Temperiereinrichtung zugeordnete Steuer- oder Regelvorrichtung mittels der signalleitenden Verbindung zur Steuer- oder Regeleinheit dazu ausgebildet ist, alle oder einen Teil der Informationen hinsichtlich des Systems der Temperiereinrichtung, der Steuerbefehle, der Regelbefehle und der Einstellungen der Temperiereinrichtung an die Steuer- oder Regeleinheit weiterzugeben.

Die Steuer- oder Regeleinheit kann dazu ausgebildet sein, auf Grundlage der übermittelten Signale der Steuer- oder Regelvorrichtung die jeweils zugeordnete Temperiereinheit zu beobachten, zu diagnostizieren und/oder zu analysieren.

Vorzugsweise kann vorgesehen sein, dass die Steuer- oder Regeleinheit dazu ausgebildet ist, über die signalleitende Verbindung Signale an die Steuer- oder Regelvorrichtung zu übermitteln, welche Signale die Steuer- oder Regelvorrichtung direkt dazu veranlassen, eine Einstellung, Regelung oder Steuerung der zugeordneten Temperiereinrichtung vorzunehmen.

Es kann vorgesehen sein, dass die Steuer- oder Regeleinheit dazu ausgebildet ist, bei einer Veränderung des Betriebszustandes einer der Produktionszellen entsprechend der Ansteuerbefehle an die anderen Steuer- oder Regelvorrichtungen der anderen Produktionszellen auszugeben, wobei die Steuer- oder Regelvorrichtungen dazu ausgebildet sind, diese Ansteuerbefehle an der jeweiligen Temperiereinrichtung umzusetzen.

Vorzugsweise kann vorgesehen sein, dass zumindest eine, vorzugsweise alle, der Temperiereinrichtungen wenigstens einen, vorzugsweise signalleitend mit der Steuer- oder Regeleinheit verbundenen, Sensor aufweist, welcher dazu ausgebildet ist, ein charakteristisches Signal für einen Betriebszustand der jeweiligen Produktionszelle zu erfassen. Diese Signalverbindung kann direkt oder indirekt vorliegen, beispielsweise vermittels der entsprechenden Steuer- oder Regelvorrichtung.

Ein entsprechender Sensor kann beispielsweise einen Temperatursensor, einen Drucksensor, einen Durchflusssensor, einen Volumenstromsensor, ein Sensor zur Wärmestrommessung, ein Sensorelement zur Temperaturdifferenzmessung und/oder eine Kombination dieser umfassen.

Es kann vorgesehen sein, dass die Steuer- oder Regeleinheit dazu ausgebildet ist, durch übermittelte Signale der Steuer- oder Regelvorrichtung und/oder des Sensors eine Veränderung des Betriebszustandes der zugeordneten Produktionszelle festzustellen und/oder den Betriebszustand der zugeordneten Produktionszelle zu überwachen.

Vorzugsweise kann vorgesehen sein, dass die Steuer- oder Regeleinheit dazu ausgebildet ist, bei einer Veränderung des Betriebszustandes der zugeordneten Produktionszelle, vorzugsweise betragsmäßig, größer einem vordefinierten Grenzwert, die Ansteuerbefehle der Temperiereinrichtung der anderen Produktionszellen und/oder der Fördervorrichtung zu verändern.

Es kann vorgesehen sein, dass die wenigstens eine durch die zentrale Steuer- oder Regeleinheit ansteuerbare Fördervorrichtung dazu ausgebildet ist, ein in einen zentralen Zuführkanal zugeführtes Temperiermedium für die wenigstens eine den Produktionszellen zugeordneten Temperiereinrichtungen bereitzustellen.

Vorzugsweise kann vorgesehen sein, dass die Steuer- oder Regeleinheit dazu ausgebildet ist, bei einer Veränderung eines Betriebszustandes einen den Produktionszellen entsprechenden Ansteuerbefehle an die wenigstens eine Fördervorrichtung auszugeben, wobei die Steuer- oder Regeleinrichtung dazu ausgebildet ist, eine Förderleistung der wenigstens einen Fördervorrichtung des Temperiersystems an die Veränderung der Betriebsbedingung anzupassen.

So kann es beispielsweise vorgesehen sein, dass, wenn eine der Produktionszellen aus dem aktiven Betrieb herausgenommen wird (abgeschaltet wird), die Steuer- oder Regeleinheit dies erfasst, und durch Ansteuerung der Fördervorrichtung die Förderleistung der Fördervorrichtung entsprechend um das Maß verringert, welches zuvor durch die entsprechend abgeschaltete Produktionszelle benötigt wurde, sodass sich das Abschalten der Produktionszelle nicht oder in abgeschwächter Form auf die anderen Produktionszellen auswirkt.

Es kann vorgesehen sein, dass die den Produktionszellen zugeordneten wenigstens einen Temperiereinrichtungen mit wenigstens einem zentralen Zufuhrkanal und wenigstens einem zentralen Rückführkanal des Temperiersystems verbunden sind, wobei über den zentralen Zuführkanal den Temperiereinrichtungen ein Temperiermedium bereitgestellt wird und über den zentralen Abführkanal abgeführt wird.

Vorzugsweise kann vorgesehen sein, dass zumindest eine, vorzugsweise alle, der den Produktionszellen zugeordneten wenigstens einen Temperiereinrichtungen eine mit der Steuer- oder Regeleinheit und/oder der Steuer- oder Regelvorrichtung signalleitend verbundene Drosselvorrichtung aufweist, welche dazu ausgebildet ist, eine Temperierung durch Variation des Volumenstroms des Temperiermediums anzupassen.

Es kann vorgesehen sein, dass die Steuer- oder Regeleinheit dazu ausgebildet ist, bei einer Veränderung des Betriebszustandes einer Produktionszelle einen Ansteuerbefehl an die den anderen Produktionszellen entsprechend zugeordneten Drosselvorrichtungen auszugeben. Dies kann direkt geschehen oder indirekt, beispielsweise vermittels der entsprechenden Steuer- oder Regelvorrichtung.

Vorzugsweise kann es vorgesehen sein, dass die Steuer- oder Regeleinheit dazu ausgebildet ist, bei einer Veränderung eines Betriebszustandes der Produktionszellen, welche zu einem verringerten Energiebedarf zur Temperierung der zugehörigen Produktionszelle führt, insbesondere zu einem Abschalten der zugehörigen Produktionszelle führt, eine Förderleistung der wenigstens einen Fördervorrichtung zu verringern und/oder einen Volumenstrom durch die Temperiereinrichtungen der anderen Produktionszellen zu verringern.

Ein verringerter Bedarf zur Temperierung einer Produktionszelle kann beispielsweise einem Abschalten der Produktionszelle, einer Produktionsverlangsamung (insbesondere einer Zykluszeitreduktion), einer Temperaturschwankung der Umgebung oder auch einer anderen Umgebungsbeeinflussung geschuldet sein.

Es kann vorgesehen sein, dass die Steuer- oder Regeleinheit dazu ausgebildet ist, bei einer Veränderung eines Betriebszustandes einer der Produktionszellen, welche zu einem erhöhten Bedarf zur Temperierung der zugehörigen Produktionszelle führt, eine Förderleistung der wenigstens einen Fördervorrichtung zu erhöhen und/oder einen Volumenstrom durch die Temperiereinrichtung der anderen Produktionszellen zu vergrößern und/oder ein Warnsignal auszugeben und/oder die Betriebsbedingungen der anderen Produktionszellen, insbesondere mittels der Steuer- oder Regelvorrichtungen, anzupassen.

Ein Warnsignal kann beispielweise ausgegeben werden, wenn die Systemgrenzen des Temperiersystems erreicht werden, bei welcher eine geforderte Temperiermedienmenge und/oder ein geforderter Temperiermedienvolumenstrom durch die Fördervorrichtung nicht mehr bereitgestellt werden kann.

Es kann vorgesehen sein, dass eine Priorisierung (beispielsweise anhand der durch die einzelne Produktionszellen produzierten Bauteile) in der Steuer- oder Regeleinheit hinterlegt ist.

Eine solche Priorisierung kann beispielsweise die Steuer- oder Regeleinheit dazu veranlassen, dass, wenn durch einen erhöhten Temperierbedarf der Produktionszellen, welcher das System über die Systemgrenzen hinausführt, die Produktionszelle oder die Produktionszellen mit der geringsten Priorisierung mit ihrem Betriebszustand dermaßen angepasst werden, dass diese zugunsten der Produktionszellen mit höherer Priorisierung ihre Produktivität verringern oder gar abgeschaltet werden.

In einem einfachen Beispiel kann somit die Steuer- oder Regeleinheit dazu ausgebildet sein, dass, wenn durch wechselnde Betriebsbedingungen das Temperiersystem nicht mehr die geforderte Temperierleistung erfüllen kann (die geforderte Temperiermediummenge nicht mehr bereitstellen kann), über die hinterlegte Priorisierung in der Steuer- oder Regeleinheit die Produktionszellen mit hoher Priorisierung weiter mit der geforderten Temperiermedienmenge beliefert wird, wohingegen die Produktionszellen mit geringerer Priorisierung in ihrer Produktivität verlangsamt werden oder gar abgeschaltet werden, um den Betrieb der Produktionszellen mit der hohen Priorisierung weiter unbeeinträchtigt aufrecht zu erhalten.

Weiters wird Schutz begehrt für ein Verfahren zum Betreiben eines Temperiersystems zum Temperieren von Komponenten, vorzugsweise Formwerkzeugen von Produktionszellen, insbesondere erfindungsgemäßen Temperiersystemen, wobei jeweils wenigstens eine zentral versorgbare und wenigstens einer Produktionszelle zugeordnete Temperiereinrichtung verwendet wird, und optional durch wenigstens eine Fördervorrichtung die Temperiereinrichtungen mit einem Temperiermedium versorgt werden, wobei beim Verändern oder bei einer Veränderung eines Betriebszustandes wenigstens einer Produktionszelle, eine dadurch verursachte Folgeveränderung von Betriebszuständen, der den anderen Produktionszellen zugeordneten Temperiereinrichtungen, durch Verändern von Einstellungen und/oder Ansteuerbefehlen der Temperiereinrichtungen und optional der wenigstens einen Fördervorrichtung, zumindest teilweise kompensiert werden.

Die Temperierung in einer Produktionszelle kann in gewissen Ausführungsformen variotherm sein. Das heißt, in einem ersten Teilzeitraum eines Produktionszyklus kann die Temperierung in der Erwärmung eines Formwerkzeugs bestehen (beispielsweise um optimale Bedingungen für den Einspritzprozess zu schaffen) und in einem zweiten Zeitraum kann die Temperierung in einer Kühlung des Formwerkzeugs bestehen (beispielsweise um ein möglichst schnelles Abkühlen und/oder Erstarren des Formteils und damit eine so kurz wie mögliche Zykluszeit zu erreichen).

Schutz wird ebenfalls begeht für ein Computerprogrammprodukt umfassend Befehle, die einen das Computerprogrammprodukt ausführenden Computer dazu veranlassen, jeweils wenigstens eine Temperiereinrichtung von Produktionszellen und optional wenigstens eine Fördervorrichtung durch Ausgeben von Ansteuerbefehlen anzusteuern, wobei die Befehle den ausführenden Computer außerdem dazu veranlassen, beim Verändern und/oder bei einer Veränderung eines Betriebszustands wenigstens einer Produktionszelle eine dadurch verursachte Folgeveränderung von Betriebszuständen der den anderen Produktionszellen zugeordneten Temperiereinrichtungen durch Verändern der Ansteuerbefehle zumindest teilweise zu kompensieren.

Weiters wird Schutz begehrt für einen computerlesbaren transitorischen oder nicht-transitorischen Datenträger, auf dem ein erfindungsgemäßes Computerprogrammprodukt gespeichert ist.

Ebenfalls wird Schutz begehrt für ein Datenträgersignal, welches Ansteuerbefehle beinhaltet, welche die Funktion haben, beim Verändern und/oder bei einer Veränderung eines Betriebszustands wenigstens einer Produktionszelle eine dadurch verursachte Folgeveränderung von Betriebszuständen anderer Produktionszellen zugeordneten Temperiereinrichtungen zumindest teilweise zu kompensieren.

Weitere Vorteile und Einzelheiten der Erfindung ergeben sich aus den Figuren sowie der dazugehörigen Figurenbeschreibung. Dabei zeigt:
- Fig. 1: ein erstes Ausführungsbeispiel eines erfindungsgemäßen Temperiersystems
- Fig. 2: ein zweites Ausführungsbeispiel eines erfindungsgemäßen Temperiersystems
- Fig. 3 und 4: zwei unterschiedliche Ausführungsformen von Produktionszellen

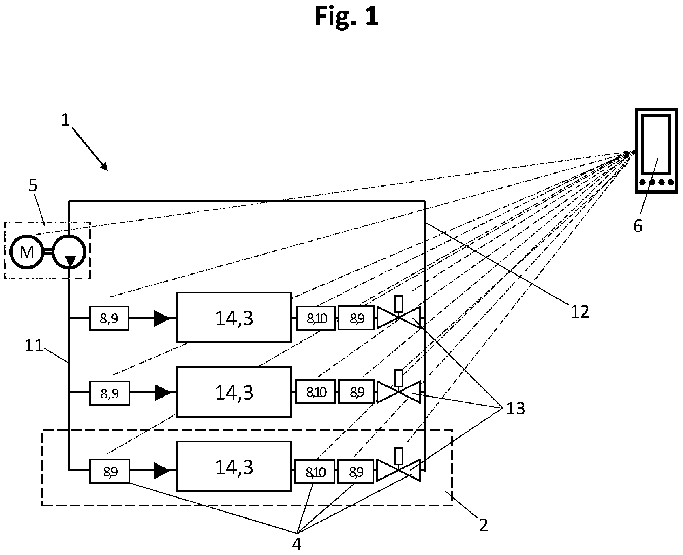

Figur 1 zeigt ein erstes Ausführungsbeispiel eines erfindungsgemäßen Temperiersystems 1.

Das Temperiersystem 1 umfasst in diesem Ausführungsbeispiel eine zentrale Fördervorrichtung 5, bestehend aus einem Antriebsmotor und einer Förderpumpe.

Diese Fördervorrichtung 5 ist dazu ausgebildet, eine Zirkulation des Temperiermediums in den zentralen Zuführkanal 11 durch die Produktionszellen 2 in den zentralen Abführkanal 12 zurück in die Fördervorrichtung 5 zu erzeugen.

Gemäß Ausführungsvarianten des Standes der Technik können in diesem Kreislauf zur Erwärmung oder zur Kühlung des Temperiermediums Wärmetauscher, Heizelemente angeordnet sein, eine Beimengung von kaltem oder warmen Temperiermedium vorgesehen sein und/oder zur Aufrechterhaltung eines Drucks im System eine Zuführvorrichtung für Temperiermedien vorgesehen sein. Diese Komponenten sind aus Gründen der Übersichtlichkeit in den Figuren nicht dargestellt.

Eine Förderleistung der Fördervorrichtung 5 kann über die zentrale Steuer- oder Regeleinheit 6 gesteuert oder geregelt werden, wobei diese beispielsweise einer Summe der benötigten Temperiermedienmengen und/oder benötigte Temperiermedienvolumenströme der einzelnen Produktionszellen 2 entsprechen kann.

Den drei Produktionszellen 2 dieses Ausführungsbeispiels ist jeweils eine Komponente zugeordnet, welche es gilt zu temperieren.

Diese Komponenten 14 der Produktionszellen 2 sind in diesem Ausführungsbeispiel als Formwerkzeuge 3 umgesetzt. Solche Formwerkzeuge können beispielsweise Spritzgießformen sein.

Zur Temperierung dieser Komponenten 14 weist eine jede Produktionszelle 2 eine Temperiereinheit 4 auf.

Diese Temperiereinheit 4 umfasst zwei Temperatursensoren 9, einen Durchflusssensor 10 sowie eine als Drosselventil ausgebildete Drosselvorrichtung 13.

Die Anordnung eines Temperatursensors 9 in Strömungsrichtung des Temperiermediums vor der Komponente 14 und eines Temperatursensors 9 nach der Komponente 14 sowie des Durchflusssensors in Strömungsrichtung des Temperiermediums nach der Komponente 14, lässt eine optimale Überwachung der Temperierung der Komponente 14 zu, womit durch die der Steuer- oder Regeleinheit bereitgestellten Signale ein eindeutiger Rückschluss auf ein Temperaturgefälle, eine Durchflussrate und/oder einen Volumenstrom genommen werden kann.

Durch diesen Rückschluss kann die Steuer- oder Regeleinheit 6 individuell pro Produktionszelle 2 die Temperierung durch Steuern oder Regeln der Drosselvorrichtungen 13 an den Komponenten 14 einstellen, regeln und/oder überwachen.

Wenn nun eine Veränderung und/oder ein Verändern eines Betriebszustandes einer Produktionszelle 2 auftritt, kann dies direkt von der Steuer- oder Regeleinheit 6 erkannt werden.

Eine solche Änderung des Betriebszustandes kann aktiv vorgenommen werden, indem die Steuer- oder Regeleinheit 6 zur Optimierung der Temperierung der Komponente 14 einer zugehörigen Produktionszelle 2 eine Veränderung der Drosselvorrichtung 13 vornimmt und/oder passiv dadurch geschehen, dass sich Umgebungsbedingungen in der Produktionszelle 2 verändern.

Solche Änderungen der Umgebungsbedingungen in der Produktionszelle 2 können beispielsweise daher stammen, dass eine Umgebungstemperatur steigt oder sinkt, eine Zykluszeit erhöht oder verringert wird oder sich auch die Absoluttemperatur durch längeren Betrieb der Produktionszelle 2 der Komponente 14 erhöht oder verringert.

Wenn nun eine solche Veränderung eines Betriebszustandes einer Produktionszelle 2 auftritt, betrifft dies direkt die anderen Produktionszellen, da sich durch das Öffnen oder Schließen der Drosselvorrichtung 13 eine unterschiedliche Verteilung des Temperiermediums, geliefert durch die Fördervorrichtung 5 auf die verbleibenden Produktionszellen, ergibt.

Um jedoch die anderen Produktionszellen vor Folgeveränderungen zu schützen, greift die Steuer- oder Regeleinheit 6 auch direkt auf die anderen Produktionszellen über die Drosselvorrichtungen 13 ein, um deren Temperierung zur Kompensation möglichst konstant zu halten.

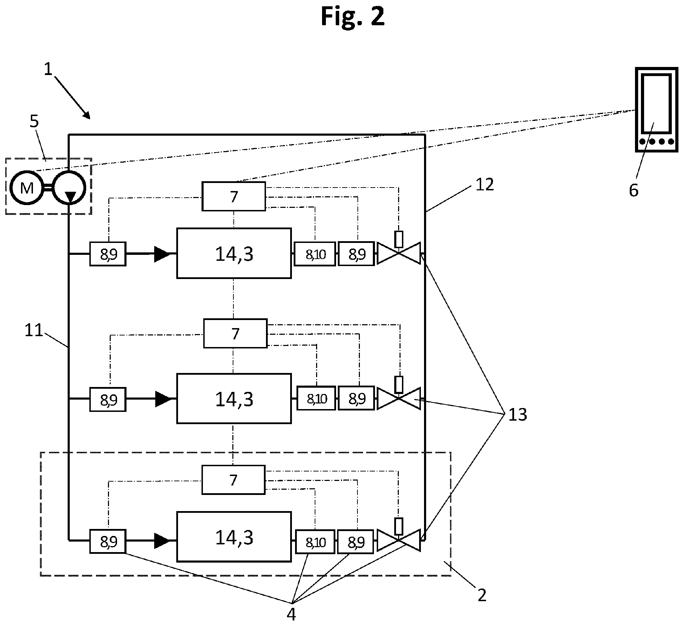

Im Unterschied zur Ausführungsform der Figur 1 zeigt die Ausführungsform der Figur 2 eines erfindungsgemäßen Temperiersystems das Vorsehen von Steuer- oder Regelvorrichtungen 7, welche jeweils einer Temperiereinrichtung 4 einer jeden Produktionszelle 2 zugeordnet sind. Diese Steuer- oder Regelvorrichtungen 7 der einzelnen Produktionszellen 2 sind dazu ausgebildet, lokal oder individuell jede Temperiereinrichtung 4 der zugehörigen Produktionszelle 2 hinsichtlich der Temperierung der jeweiligen Komponente 14 vorzunehmen.

Diese Steuer- oder Regelvorrichtungen 7 können auch beispielsweise durch zentrale Maschinensteuerungen, beispielsweise einer Spritzgießmaschine, umgesetzt sein.

Die Steuer- oder Regelvorrichtungen 7 sind signalleitend mit der Steuer- oder Regeleinheit 6 des Temperiersystems 1 verbunden, wobei die Steuer- oder Regeleinheit 6 verkürzt ausgedrückt eine übergeordnete Steuerung oder Regelung der Steuer- oder Regelvorrichtung 7 vornimmt.

Die Steuer- oder Regelvorrichtungen 7 sind dazu ausgebildet, jegliche Parameter, Sensorsignale und Betriebszustände der Produktionszellen 2 an die Steuer- oder Regeleinheit 6 zu übermitteln.

Diese Steuer- oder Regeleinheit 6 überwacht dabei die übermittelten Signale und stellt eine Veränderung oder eine Änderung eines Betriebszustandes einer Produktionszelle 2 oder der Produktionszelle 2 zugeordneten Temperiereinrichtung 4 fest.

Bei einem solchen Feststellen einer Änderung oder einer Veränderung eines Betriebszustandes einer Produktionszelle 2 wird durch die Steuer- oder Regeleinheit 6 ein Ansteuersignal an die Steuer- oder Regelvorrichtung 7 der anderen Produktionszellen 2 ausgegeben, um eine Folgeänderung zu kompensieren.

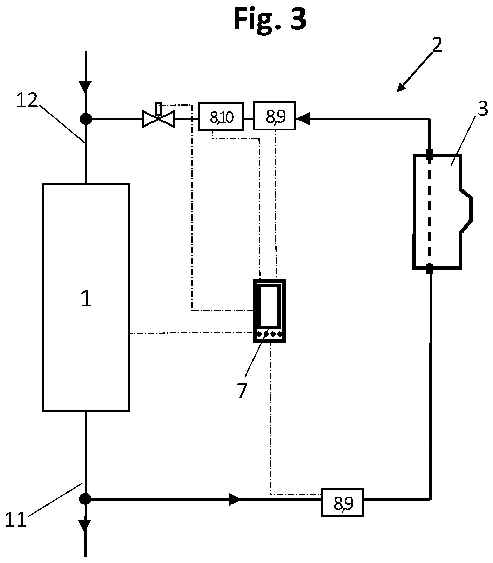

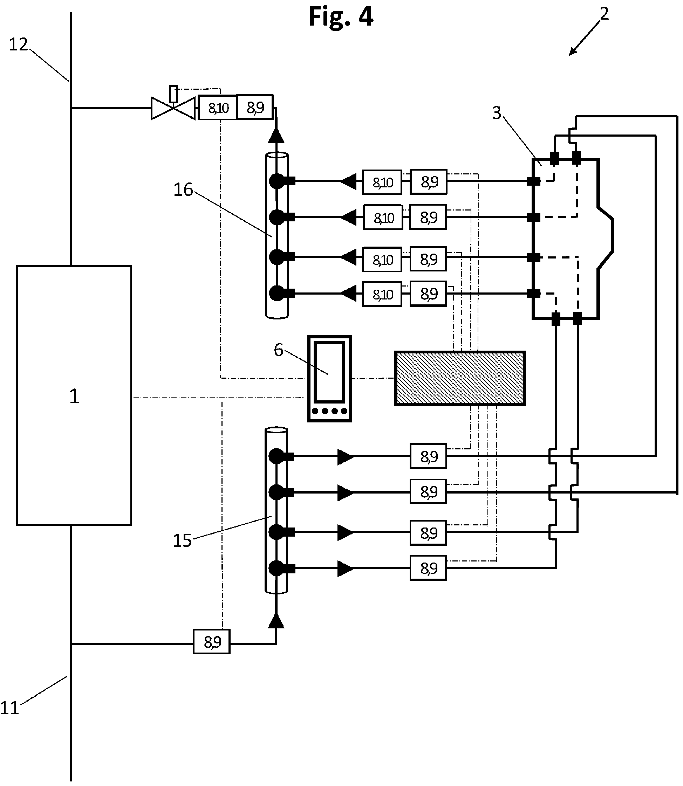

Die Figuren 3 und 4 zeigen zwei unterschiedliche Ausführungsbeispiele von Produktionszellen 2, welche in ein Temperiersystem 1 der vorhergehenden Ausführungsvarianten der Figuren 1 und 2 integriert sein können.

Das Ausführungsbeispiel der Figur 3 einer Produktionszelle 2 umfasst ein Formwerkzeug 3, welches einen Temperierkanal aufweist. Dieser Temperierkanal wird durch eine vom zentralen Zuführkanal 11 abzweigende Leitung gespeist und mit Temperiermedium versorgt. Das aus dem Formwerkzeug 3 abfließende Temperiermedium wird wiederum zurückgeführt in den zentralen Abführkanal 12 des Temperiersystems 1. Wiederum sind in der Produktionszelle 2 Temperatursensoren 9 und ein Durchflusssensor 10 zur Prozessüberwachung bzw. zur Überwachung des Betriebszustandes der Produktionszelle 2 vorgesehen, welche entsprechende Signale an die Steuer- oder Regelvorrichtung 7 weiterleiten.

Weiters ist eine als Drosselventil ausgebildete Drosselvorrichtung 13 vorgesehen, welche zur Steuer- oder Regelung signalleitend mit der Steuer- oder Regelvorrichtung 7 verbunden ist.

Die Steuer- oder Regelvorrichtung 7 ist wiederum mit dem Temperiersystem 1, genauer genommen der Steuer- oder Regeleinheit 6 des Temperiersystems 1, signalleitend verbunden, um Signale an die Steuer- oder Regeleinheit 6 bereitzustellen oder Ansteuersignale von der Steuer- oder Regeleinheit 6 zu empfangen.

Das Ausführungsbeispiel der Figur 4 zeigt im Wesentlichen eine ähnliche Ausgestaltung wie Figur 3.

Figur 4 umfasst ergänzend zu Figur 3 mehrere - vier - Temperierkanäle im Formwerkzeug 3, wobei die Temperiereinrichtung 4 einen Temperiermedienverteiler 15 und eine Temperiermediensammelleitung 16 umfasst, um den Temperiermedienstrom, stammend aus dem zentralen Zuführkanal 11, auf die vier Temperierkanäle des Formwerkzeugs 3 aufzuteilen bzw. über die Temperiermediensammelleitung 16 wieder zu sammeln.

Des Weiteren umfasst zur kontrollierten Temperierung einer jeden Temperierleitung des Formwerkzeugs 3 eine jede dieser Leitungen zwei Temperatursensoren 9 und einen zusätzlichen Durchflusssensor 10.

Diese Vielzahl an Sensorsignalen aus den einzelnen Temperierleitungen des Formwerkzeugs 3 sind zentral sammelbar und an die Steuer- oder Regelvorrichtung 7 leitbar, welche wiederum diese Signale über ihre signalleitende Verbindung an die Steuer- oder Regeleinheit 6 des Temperiersystems 1 weiterleiten kann.

Es könnte beispielsweise bei einer Ausgestaltung, wie durch Fig. 4 gezeigt, auch vorgesehen sein, dass auf den Durchflusssensor 10 stromabwärts der Temperiermediensammelleitung 16 verzichtet wird, wobei diese Information beispielweise mittels der Steuer- oder Regeleinheit 6 durch Addition der durch die in den einzelnen Temperierkanäle angeordneten Durchflusssensoren 10 gewonnenen Sensorsignale ebenfalls erlangt werden könnte.

Auch ein Entfall der Temperatursensoren 9 in den einzelnen Temperierkanälen stromabwärts des Tempereiermedienverteilers und stromaufwärts des Formwerkzeuges 3 ist durchaus vorstellbar, wobei dennoch ausreichend Informationen der Steuer- oder Regeleinheit 6 zur Erfassung und/oder Überwachung eines Betriebszustandes bereitstellbar wären.

Auch eine Ausgestaltung der Fig. 4 gänzlich ohne Temperatursensoren 9 wäre durchaus vorstellbar, wobei eine Überwachung, Regelung und/oder Steuerung der Steuer- oder Regeleinheit 6 lediglich auf Basis der Durchflusssensoren 10 möglich wäre.

### Bezugszeichenliste

- 1: Temperiersystem
- 2: Produktionszelle
- 3: Formwerkzeug
- 4: Temperiervorrichtung
- 5: Fördervorrichtung
- 6: Steuer- oder Regeleinheit
- 7: Steuer- oder Regelvorrichtung
- 8: Sensor
- 9: Temperatursensor
- 10: Durchflusssensor
- 11: zentraler Zuführkanal
- 12: zentraler Abführkanal
- 13: Drosselvorrichtung
- 14: Komponente
- 15: Temperiermedienverteiler
- 16: Temperiemediensammelleitung

## Patentansprüche

1. Temperiersystem zum Temperieren von Komponenten (14), insbesondere Formwerkzeugen (3), von Produktionszellen (2), mit jeweils wenigstens einer zentral versorgbaren und wenigstens einer Produktionszelle (2) zugeordneten Temperiereinrichtung (4) und einer zentralen Steuer- oder Regeleinheit (6) sowie optional wenigstens einer Fördervorrichtung (5) zum Versorgen der Temperiereinrichtungen (4) mit einem Temperiermedium, wobei die zentrale Steuer- oder Regeleinheit (6) zum Ansteuern der jeweils wenigstens einen Temperiereinrichtung (4) und optional der wenigstens einen Fördervorrichtung (5) mittels Ansteuerbefehlen ausgebildet ist, **dadurch gekennzeichnet, dass** die zentrale Steuer- oder Regeleinheit (6) dazu ausgebildet ist, beim Verändern und/oder bei einer Veränderung eines Betriebszustands wenigstens einer Produktionszelle (2) eine dadurch verursachte Folgeveränderung von Betriebszuständen der den anderen Produktionszellen (2) zugeordneten Temperiereinrichtungen (4) durch Verändern der Ansteuerbefehle zumindest teilweise zu kompensieren.

2. Temperiersystem nach Anspruch 1, wobei eine den Produktionszellen (2) zugeordnete wenigstens eine Temperiereinrichtung (4) eine Steuer- oder Regelvorrichtung (7) aufweist, welche Steuer- oder Regelvorrichtung (7) signalleitend mit der zentralen Steuer- oder Regeleinheit (6) verbunden ist, wobei die Steuer- oder Regelvorrichtung (7) dazu ausgebildet ist, die Temperierung der jeweiligen Produktionszelle (2) zu steuern oder zu regeln.

3. Temperiersystem nach Anspruch 2, wobei die Steuer- oder Regeleinheit (6) dazu ausgebildet ist, bei einer Veränderung des Betriebszustandes einer der Produktionszellen (2) entsprechende Ansteuerbefehle an die wenigstens eine Steuer- oder Regelvorrichtungen (7) der anderen Produktionszellen (2) auszugeben, wobei die Steuer- oder Regelvorrichtungen (7) dazu ausgebildet sind, diese Ansteuerbefehle an der jeweiligen Temperiereinrichtungen (4) umzusetzen.

4. Temperiersystem nach wenigstens einem der vorhergehenden Ansprüche, wobei zumindest eine, vorzugsweise alle, der Temperiereinrichtungen (4) wenigstens einen, vorzugsweise signalleitend mit der zentralen Steuer- oder Regeleinheit (6) verbundenen, Sensor (8) aufweist, welcher dazu ausgebildet ist, ein charakteristisches Signal für einen Betriebszustand der jeweiligen Produktionszelle (2) zu erfassen.

5. Temperiersystem nach Anspruch 2 und/oder 4, wobei die Steuer- oder Regeleinheit (6) dazu ausgebildet ist, durch übermittelte Signale der Steuer- oder Regelvorrichtung (7) und/oder des Sensors (10) eine Veränderung des Betriebszustandes der zugeordneten Produktionszelle (2) festzustellen und/oder den Betriebszustand der zugeordneten Produktionszelle (2) zu überwachen.

6. Temperiersystem nach Anspruch 5, wobei die Steuer- oder Regeleinheit (6) dazu ausgebildet ist, bei einer Veränderung des Betriebszustandes der zugeordneten Produktionszelle (2), vorzugsweise betragsmäßig, größer einem vordefinierten Grenzwert die Ansteuerbefehle der Temperiereinrichtungen (4) der anderen Produktionszellen (2) und/oder optional der Fördervorrichtung (5) zu verändern.

7. Temperiersystem nach wenigstens einem der vorhergehenden Ansprüche, wobei die wenigstens eine durch die zentrale Steuer- oder Regeleinheit (6) ansteuerbare Fördervorrichtung (5) dazu ausgebildet ist, ein in einem zentralen Zufuhrkanal (11) geführtes Temperiermedium für die wenigstens einen den Produktionszellen (2) zugeordneten Temperiereinrichtungen (4) bereitzustellen.

8. Temperiersystem nach Anspruch 7, wobei die Steuer- oder Regeleinheit (6) dazu ausgebildet ist, bei einer Veränderung des Betriebszustandes einer der Produktionszellen (2) entsprechende Ansteuerbefehle an die wenigstens eine Fördervorrichtung (5) auszugeben, wobei die Steuer- oder Regeleinrichtung (6) dazu ausgebildet ist, eine Förderleistung der wenigstens einen Fördervorrichtung (5) des Temperiersystems (1) an die Veränderung der Betriebsbedingung anzupassen.

9. Temperiersystem nach wenigstens einem der vorhergehenden Ansprüche, wobei die den Produktionszellen (2) zugeordneten wenigstens einen Temperiereinrichtungen (4) mit wenigstens einem zentralen Zuführkanal (11) und wenigstens einem zentralen Rückführkanal (12) des Temperiersystems (1) verbunden sind, wobei über den zentralen Zuführkanal (11) den Temperiereinrichtungen (4) ein Temperiermedium bereitgestellt und über den zentralen Abführkanal (12) abgeführt wird.

10. Temperiersystem nach wenigstens einem der vorhergehenden Ansprüche, wobei zumindest eine, vorzugsweise alle, der den Produktionszellen (2) zugeordneten wenigstens einen Temperiereinrichtungen (4) eine mit der Steuer- oder Regeleinheit (6) und/oder der Steuer oder Regelvorrichtung (7) signalleitend verbundene Drosselvorrichtungen (13) aufweist, welche dazu ausgebildet ist, eine Temperierung durch Variation eines Volumenstroms des Temperiermediums anzupassen.

11. Temperiersystem nach Anspruch 10, wobei die Steuer- oder Regeleinheit (6) dazu ausgebildet ist, bei einer Veränderung des Betriebszustandes einer der Produktionszellen (2) die entsprechenden Ansteuerbefehle direkt oder indirekt an wenigstens eine Drosselvorrichtung (13) der anderen Produktionszellen (2) auszugeben.

12. Temperiersystem nach wenigstens einem der vorhergehenden Ansprüche, wobei die Steuer- oder Regeleinheit (6) dazu ausgebildet ist, bei einer Veränderung eines Betriebszustandes einer der Produktionszellen (2), welche zu einem verringerten Bedarf zur Temperierung der zugehörigen Produktionszelle (2) führt, insbesondere zu einem Abschalten der zugehörigen Produktionszelle (2) führt, eine Förderleistung der wenigstens einen Fördervorrichtung (5) zu verringern und/oder einen Volumenstrom der Fördervorrichtung (5) zu verringern.

13. Temperiersystem nach wenigstens einem der vorhergehenden Ansprüche, wobei die Steuer- oder Regeleinheit (6) dazu ausgebildet ist, bei einer Veränderung eines Betriebszustandes einer der Produktionszellen (2), welche zu einem erhöhten Bedarf zur Temperierung der zugehörigen Produktionszelle (2) führt, eine Förderleistung der wenigstens einen Fördervorrichtung (5) zu erhöhen und/oder einen Volumenstrom der Fördervorrichtung (5) zu vergrößern und/oder ein Warnsignal auszugeben und/oder die Betriebsbedingungen der anderen Produktionszellen (2), insbesondere mittels der Steuer- oder Regelvorrichtungen (7), anzupassen.

14. Verfahren zum Betreiben eines Temperiersystems (1) zum Temperieren von Komponenten (14), vorzugsweise Formwerkzeugen (3), von Produktionszellen (2), insbesondere einem Temperiersystem (1) nach einem der vorhergehenden Ansprüche, wobei jeweils wenigstens eine zentral versorgbare und wenigstens einer Produktionszelle (2) zugeordnete Temperiereinrichtung (4) verwendet wird und optional durch wenigstens eine Fördervorrichtung (5) die Temperiereinrichtungen (4) mit einem Temperiermedium versorgt werden, **dadurch gekennzeichnet, dass** beim Verändern oder bei einer Veränderung eines Betriebszustands wenigstens einer Produktionszelle (2) eine dadurch verursachte Folgeveränderung von Betriebszuständen der den anderen Produktionszellen (2) zugeordneten Temperiereinrichtungen (4) durch Verändern von Einstellungen und/oder Ansteuerbefehlen der Temperiereinrichtungen (4) und optional der wenigstens einen Fördervorrichtung (5) zumindest teilweise kompensiert werden.

15. Verwendung eines Temperiersystems (1) nach einem der Ansprüche 1 bis 13 bei einem Verfahren nach Anspruch 14.

16. Computerprogrammprodukt, insbesondere geeignet zum Durchführen eines Verfahrens nach Anspruch 14, umfassend Befehle, die einen das Computerprogrammprodukt ausführenden Computer dazu veranlassen, jeweils wenigstens eine Temperiereinrichtung (4) von Produktionszellen und optional wenigstens eine Fördervorrichtung (5) durch Ausgeben von Ansteuerbefehlen anzusteuern, wobei die Befehle den ausführenden Computer außerdem dazu veranlassen, beim Verändern und/oder bei einer Veränderung eines Betriebszustands wenigstens einer Produktionszelle (2) eine dadurch verursachte Folgeveränderung von Betriebszuständen der den anderen Produktionszellen (2) zugeordneten Temperiereinrichtungen (4) durch Verändern der Ansteuerbefehle zumindest teilweise zu kompensieren.

17. Computerlesbarer transitorischer oder nichttransitorischer Datenträger, auf dem ein Computerprogrammprodukt gemäß Anspruch 16 gespeichert ist.

18. Datenträgersignal, welches Ansteuerbefehle beinhaltet, welche die Funktion haben, beim Verändern und/oder bei einer Veränderung eines Betriebszustands wenigstens einer Produktionszelle (2) eine dadurch verursachte Folgeveränderung von Betriebszuständen anderer Produktionszellen (2) zugeordneten Temperiereinrichtungen (4) zumindest teilweise zu kompensieren.
